# EUROPEAN PATENT APPLICATION

(11) **EP 4 329 376 A1**
(43) Date of publication of application: **28.02.2024**
(21) Application number: 22814911.8
(22) Date of filing: 21.04.2022
(51) Int. Cl.: H04W 48/02

(54) **NETWORK ACCESS METHOD, NETWORK NODE, ELECTRONIC DEVICE AND STORAGE MEDIUM**

(30) Priority: 01.06.2021 CN 202110610988
(71) Applicant: ZTE Corporation, Shenzhen, Guangdong 518057 (CN)
(72) Inventor: GAO, Jing, Shenzhen, Guangdong 518057 (CN)
(74) Representative: Savi, Massimiliano
(86) International application number: PCT/CN2022/088293
(87) International publication number: WO 2022/252864

(57) **Abstract**

A network access method, a network node, an electronic device and a storage medium. In the present application, the network access method comprises: receiving a probe request frame broadcasted by a client, the probe request frame comprising an RSSI of the client (101); detecting whether the current state satisfies a preset busy condition and whether the RSSI is not greater than a preset threshold (102); if the busy condition is satisfied, prohibiting responding to the probe request frame of the client (103); and if the busy condition is not satisfied and the RSSI is greater than the preset threshold, in response to the probe request frame, establishing a communication connection to the client and performing information interaction, or notifying a master control node in the network to select a first node in the network to respond to the probe request frame of the client (104).

## Description

### CROSS-REFERENCE TO RELATED APPLICATION

This application is filed on the basis of Chinese patent application No. 202110610988.3, filed on June 01, 2021, and claims priority to the Chinese patent application, the entire contents of which are incorporated herein by reference.

### TECHNICAL FIELD

Embodiments of the present disclosure relate to the field of communication transmission, and more particularly, to a network access method, a network node, an electronic device, and a storage medium.

### BACKGROUND

In a scenario where all nodes in a network present the same access parameter information, for example, in a wireless mesh network, which device a client accesses completely depends on the client. A conventional client determines a to-be-accessed node based on factors such as a current bandwidth and a Received Signal Strength Indication (RSSI).

However, in some cases, an optimal node selected based on information such as the current bandwidth and the RSSI is involved in some control level work. In such cases, the client performing access as a load not only affects the currently ongoing work of the node, but also cannot achieve a desirable information transmission efficiency. The node cannot control an access action of the client by utilizing an existing technology.

### SUMMARY

Embodiments of the present disclosure provide a network access method, a network node, an electronic device, and a storage medium.

An embodiment of the present disclosure provides a network access method, applied to any node in a network, where all nodes in the network present a same network address. The method includes: receiving a probe request frame broadcasted by a client, where the probe request frame includes an RSSI of the client; detecting whether a current state meets a pre-configured busy condition and whether the RSSI is not greater than a preset threshold; and in response to meeting the busy condition or the RSSI being not greater than the preset threshold, prohibiting responding to the probe request frame of the client; or in response to not meeting the busy condition and the RSSI being greater than the preset threshold, establishing a communication connection to the client and exchanging information in response to the probe request frame of the client, or notifying a master control node in the network to select a first node in the network to respond to the probe request frame of the client.

An embodiment of the present disclosure provides a network node. In a network to which the network node belongs, all nodes present a same network address, and the network node includes: a receiving module, configured to receive a probe request frame broadcasted by a client, where the probe request frame includes an RSSI of the client; a detection module, configured to detect whether a current state meets a pre-configured busy condition and whether the RSSI is not greater than a preset threshold; and a connection module, configured to: in response to meeting the busy condition or the RSSI being not greater than the preset threshold, prohibit responding to the probe request frame of the client; or in response to not meeting the busy condition and the RSSI being greater than the preset threshold, establish a communication connection to the client and exchange information in response to the probe request frame of the client, or notify a master control node in the network to select a first node in the network to respond to the probe request frame of the client.

An embodiment of the present disclosure provides an electronic device, including at least one processor and a memory communicatively connected to the at least one processor. The memory stores an instruction executable by the at least one processor which, when executed by the at least one processor, causes the at least one processor to implement the foregoing network access method.

An embodiment of the present disclosure provides a computer-readable storage medium, storing a computer program which, when executed by a processor, causes the processor to implement the foregoing network access method.

### BRIEF DESCRIPTION OF DRAWINGS

One or more embodiments are illustrated by corresponding accompanying drawings, and these illustrations do not constitute a limitation to the embodiments. Elements with the same reference numerals in the accompanying drawings are denoted as similar elements. Unless otherwise stated, the accompanying drawings do not constitute scale limitations.
FIG. 1 is a flowchart of a network access method according to an embodiment of the present disclosure;
FIG. 2 is a flowchart of a network access method according to another embodiment of the present disclosure;
FIG. 3 shows a network node according to an embodiment of the present disclosure; and
FIG. 4 shows an electronic device according to an embodiment of the present disclosure.

### DETAILED DESCRIPTION

To make objectives, technical schemes, and advantages of embodiments of the present disclosure clear, a detailed description of the embodiments of the present disclosure is made below in conjunction with the accompanying drawings. Those having ordinary skills in the art can understand that in the embodiments of the present disclosure, many technical details are provided to help readers better understand the embodiments of the present disclosure. However, the technical schemes claimed in the present disclosure can also be implemented without these technical details and various changes and modifications made based on the following embodiments. The division of the following embodiments is for the convenience of description and do not constitute any limitation to specific implementations of the present disclosure. The various embodiments can be combined with each other and referenced with each other if not in collision.

Terms such as "first", "second" and the like are used in the embodiments of the present disclosure for purposes of description and are not intended to indicate or imply relative importance or significance or to imply the number of indicated technical features. Thus, the feature defined with "first", "second" and the like may explicitly or implicitly include at least one feature. In the description of the present disclosure, "include" and "have" and any variations thereof are intended to cover nonexclusive inclusion. For example, a system, product, or device including a series of components or units is not limited to the listed components or units, but also includes unlisted components or units or other components or units inherent to such products or devices. In the description of the present disclosure, "a plurality of" means at least tow, for example, two or three, unless specified otherwise.

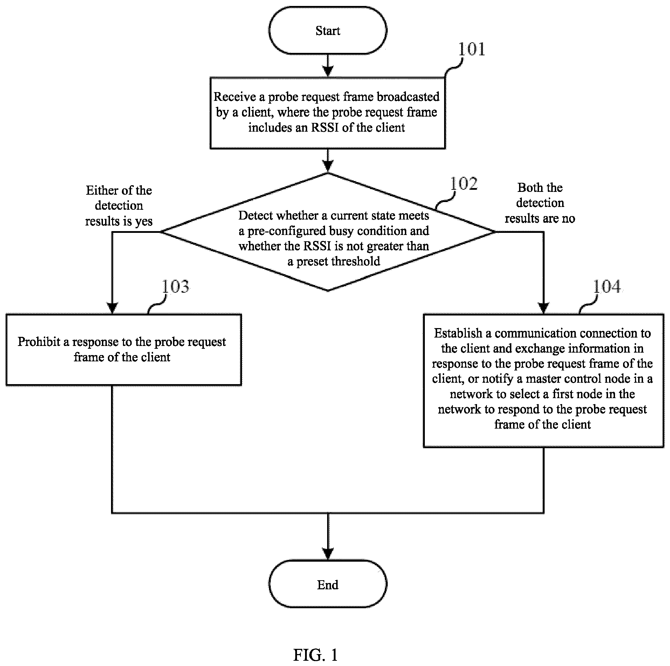

An embodiment of the present disclosure relates to a network access method, applied to any node in a network. All nodes in the network present a same network address, and the nodes may be routers in some examples. A specific process is shown in FIG. 1.

In a step of 101, a probe request frame broadcasted by a client is received, where the probe request frame includes an RSSI of the client.

In a step of 102, it is detected whether a current state meets a pre-configured busy condition and whether the RSSI is not greater than a preset threshold. If either of the detection results is yes, step 103 is performed. If both the detection results are no, step 104 is performed.

In a step of 103, a response to the probe request frame of the client is prohibited.

In a step of 104, a communication connection to the client is established and information is exchanged in response to the probe request frame of the client, or a master control node in the network is notified to select a first node in the network to respond to the probe request frame of the client.

In this embodiment, a network access method is provided, which is applied to network nodes presenting a same network address information. After a probe request frame sent by a client is received, self-detection is triggered to determine whether a current node in the network meets a pre-configured busy condition and whether a signal reception strength meets a requirement. If the busy condition is met or the signal reception strength does not meet the requirement, the client is not responded to. Therefore, the action of accessing the network node by the client is controllable, ensuring operating efficiency and quality of signal transmission between the client and the network node. In addition, it is prevented that the client accesses a busy network node or a network node with unsatisfactory signal reception strength to affects a current operating state of the node, and a case where the client cannot achieve expected information transmission efficiency after the client establishes a connection to the node in the network is avoided.

Implementation details of the network access method in this embodiment are described below. The following is only provided for ease of understanding and is not necessary for implementing this scheme.

In the step 101, the probe request frame broadcasted by the client is received, where the probe request frame includes the RSSI of the client.

For example, if the nodes presenting the same network address information are nodes in a mesh network, when needing to access the network, the client needs to send an access notification, namely, a probe request frame, to a node in the mesh network, to trigger a process of the client establishing a connection to the node. In an example, the client first broadcasts the probe request frame to the mesh network. Then, the nodes in the mesh network receive the probe request frame from the client. Events of broadcasting and receiving the probe request frame occur before the client performs data exchange with the nodes in the mesh network. The mesh network includes a plurality of nodes, and both a left node and a right node receive the probe request frame broadcasted by the client.

In the step 102, it is detected whether the current state meets the pre-configured busy condition and whether the RSSI is not greater than the preset threshold are detected, that is, it is detected whether a current node can support access by the client.

A node in the mesh network is used as an example. Busy conditions are pre-configured for the node in the mesh network. If it is detected that the current state meets any of the pre-configured busy conditions, it indicates that the node is involved in a task and is not appropriate for the client to access. When it is detected that the RSSI is not greater than the preset threshold, it indicates that the quality of signal transmission between the client and the current node is unsatisfactory, and it is also not appropriate for the client to access.

In an example, the pre-configured busy conditions include, but not limited to, before a scheduled restart, before a Firmware Over The Air (FOTA) of a mobile terminal device, and other situations where the client is not expected to access based on an actual need.

In step 103, when the current state meets the pre-configured busy condition, that is, when the current node is in a busy state and the RSSI is not greater than the threshold in the current state, a response to the probe request frame of the client is prohibited.

When the node determines that the current state is not the busy state, the node does not respond to the probe request frame of the client; or when the node determines that the RSSI is not greater than the threshold, that is, when signal strength is too low, the node does not respond to the probe request frame of the client either. A connection can be established between the client and the node only after the client sends the probe request frame and the node responds to the probe request frame. For example, when the client initiates a connection to a node in the mesh network, and the node does not respond to the probe request message sent by the client, the client has to access another node in the mesh network. In other words, a probe response is returned to the client through dynamic adjustment to control an action of accessing a node by the client, avoiding a decrease in operating efficiency of the current node caused by accessing of the client during operation and avoiding a problem that the client cannot achieve expected operating efficiency.

In an example, after determining that the node is currently in the busy state, in addition to not responding to the probe request frame of the client, the node further needs to send, to a remaining node in the network, a message indicating that the this node is in the busy state, to feed back that the current node is not connected to the client because the current state is in the busy state rather than abnormal, thereby preventing other nodes from sending, to the master control node, a message indicating that the node is abnormal. In addition, the node further sends, to the master control node, a message indicating that the node is in the busy state, to prevent the master control node from determining that the node is abnormal, thereby avoid an unnecessary abnormal scenario processing process.

In step 104, when the current node does not meet the pre-configured busy condition, that is, when the current node is in a state allowing accessing by the client, a communication connection to the client is established and the information is exchanged in response to the probe request frame of the client, or the master control node in the network is notified to select the first node in the network to respond to the probe request frame of the client.

It has been verified through detection in step 102 that the current node is not in the busy state and the signal strength is strong enough to complete data transmission. In other words, after the communication connection to the client is established, the operating state of the node is not affected, and the client can achieve an expected operating efficiency. Therefore, after receiving the probe request frame of the client, the node responds normally to establish a communication connection to the client and transmits information, or notifies the master control node in the network to select the first node in the network to respond to the probe request frame of the client.

In an example, the master control node in the network is notified to select the first node in the network to respond to the probe request frame of the client, and the first node may be a node with an optimal distance. For example, a distance to the client is obtained based on the RSSI, and the distance is sent to the master control node, such that the master control node selects the first node based on the distance to respond to the probe request frame of the client. In other words, a node can obtain the distance between the client and the node based on the RSSI and feed back the distance data to the master control node, and the master control node can select the first node with the optimal distance based on the feedback distance data and send, to the first node, a message used to respond to the probe request frame of the client. For example, the master control node selects a node closest to the client as the first node, and sends a message to the first node to trigger the first node to respond to the probe request frame of the client, such that the first node establishes a communication connection to the client and exchanges information. The master control node compares the distances between the client and the nodes to which the client is connected, and selects the first node with the optimal distance to the client to respond to the probe request frame of the client. Because the first node has an advantage in the distance to the client, the quality of data transmission between the client and the node in communication connection is further improved. It can be understood that because the node notifies the master control node to perform selection only when the busy condition is not met and the RSSI is greater than the preset threshold, all nodes to be selected by the master control node based on distances can normally be connected to the client and transmit signals.

In addition, a distance to the client is obtained based on the RSSI. For example, a distance is calculated according to a formula and a known RSSI.

In an example, after the node and the client establishes the communication connection and exchange information, the method further includes: periodically detecting, based on a first time interval, whether the current state meets the busy condition; when the busy condition is met, terminating the communication connection between the node and the client; and prohibiting responding to the probe request frame of the client within a pre-set time threshold.

With reference to the foregoing implementation process, an example is given below taking the mesh network as an example.

In the mesh network, when a client needs to access the mesh network, the client first sends a probe frame to a node in the mesh network. If the node returns a probe response frame to the client, it indicates that the node is in an accessible state. In this case, the client starts to establish a connection to the node. In this implementation, after the client sends the probe request frame, the node determines whether the busy condition is currently met and whether the RSSI is not greater than the preset threshold. If the busy condition is met or the RSSI is not greater than the preset threshold, the node does not respond to the request of the client. Even if the node is currently the optimal node according to other comprehensive data, the client still cannot access the node. Subsequently, the client initiates a connection request to other nodes that have responded to the probe request frame. If the pre-configured busy condition is not met and the RSSI is greater than the preset threshold, the node normally responds to the probe request frame of the client, and a normal procedure is restored. When the client has normally accessed the node and exchanges information with the node, the node periodically performs detection based on the pre-configured first time interval. If the node detects, during the pre-configured first time interval, that the busy condition is met, the node sends a prompt to the client and terminates the connection to the client, and does not respond to any probe response frame subsequently sent by the client.

In this embodiment, compared with an existing technology, a network access method is provided, which is applied to network nodes presenting a same network address information. After a probe request frame sent by a client is received, self-detection is triggered to determine whether a current node in a network meets the pre-configured busy condition and whether a signal reception strength meets a requirement. If the busy condition is met or the signal reception strength does not meet the requirement, the client is not responded to. Therefore, the action of accessing the network node by the client is controllable, ensuring operating efficiency and quality of signal transmission between the client and the network node. In addition, it is prevented the client accesses a busy network node or a network node with unsatisfactory signal reception strength to affect a current operating state of the node, and a case where the client cannot achieve expected information transmission efficiency after the client establishes a connection to the node in the network is avoided. After a response to the probe request frame of the client is prohibited, a message indicating that this node is in the busy state is further sent to a remaining node in the network to preventing the network from considering that this node is abnormal, which causes an unnecessary abnormality processing process.

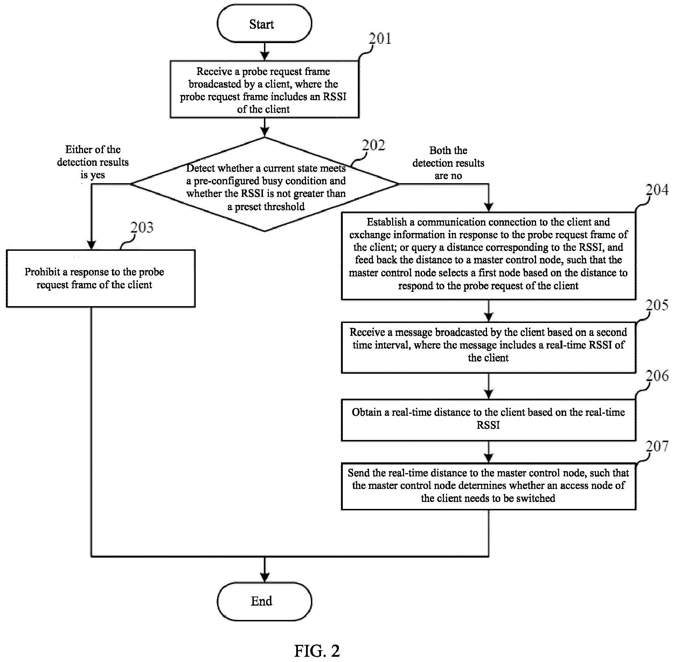

Another embodiment of the present disclosure relates to a network access method, which is applied to network nodes presenting a same network address information. A specific process is shown in FIG. 2.

In a step of 201, a probe request frame broadcasted by a client is received, where the probe request frame includes an RSSI of the client.

In a step of 202, it is detected whether a current state meets a pre-configured busy condition and whether the RSSI is not greater than a preset threshold. If either of the detection results is yes, step 203 is performed. If both the detection results are no, step 204 is performed.

In a step of 203, a response to the probe request frame of the client is prohibited.

In a step of 204, a communication connection to the client is established and information is exchanged in response to the probe request frame of the client; or a distance corresponding to the RSSI is queried, and the distance is fed back to a master control node, such that the master control node selects a first node based on the distance to respond to the probe request frame of the client.

In a step of 205, a message broadcasted by the client based on a second time interval is received, where the message includes a real-time RSSI of the client.

In a step of 206, a real-time distance to the client is obtained based on the real-time RSSI.

In a step of 207, the real-time distance is sent to the master control node, such that the master control node determines whether the node accessed by the client needs to be switched.

Step 201 to step 203 are basically the same as step 101 to step 103 in the foregoing embodiment, and details are not described herein to avoid repetition. Differences lie in step 204 to step 207, which are described in detail below.

In step 204, the distance corresponding to the RSSI is queried, and the distance is fed back to the master control node, such that the master control node selects the first node based on the distance to respond to the probe request of the client.

In an example, the current node searches a reference table of RSSIs and distances for a distance between the current node and the client using the RSSI of the client. Compared with the RSSI, the distance can more accurately reflect a relationship between the client and a network node, which is conductive to selecting an optimal node.

In an example, a distance table is provided through measurement of a node in an ideal state, and is maintained by a network node. The ideal state refers to an optimal operating range of the node without interference from another device. Therefore, by querying the table using the RSSI in the probe request frame sent by the client, a current distance can be obtained.

In another example, after a preliminary operating test, an optimal operating range of each node is recorded in the distance table, that is, under an ideal condition, the node allows access by a client with what RSSI value, in other words, a preset threshold is obtained. If the busy condition is not met, the network access method further includes: determining whether the RSSI is not greater than the preset threshold; and if the RSSI is not greater than the preset threshold, querying the distance between the node and the client based on the RSSI; or if the RSSI is greater than the preset threshold, not querying the distance between the node and the client based on the RSSI, and not responding to the client. The distance table is shown in Table 1.

**Table 1 Distance Table**

| RSSI (dBm) | -30 | -40 | -50 | -60 | -70 | -80 |
|---|---|---|---|---|---|---|
| Distance (m) | 1 to 5 | 6 to 13 | 14 to 20 | 21 to 40 | 41 to 50 | 51 to 70 |

It can be learned that in some cases, when another factor affecting the distance is of a constant value, as the RSSI changes, the measured distance changes accordingly. Because nodes of the same model use the same chip and hardware material, the nodes of the same model share the foregoing experience. A node from another manufacturer may have a different hardware radio frequency and may be adjusted later.

In step 205 to step 207, the message broadcasted by the client based on the second time interval is received, where the message includes the real-time RSSI of the client; the real-time distance to the client is obtained based on the real-time RSSI; and the real-time distance is sent to the master control node, such that the master control node determines whether the node accessed by the client needs to be switched.

For example, when the client has accessed a node in the mesh network but is in a movable state, the client broadcasts the message based on the second time interval, where the message includes the real-time RSSI; and the node queries the real-time distance to the client using the received real-time RSSI, and feeds back the real-time distance to the master control node. When the client moves to a position relatively far away from the node that is being connected to, the master control node determines, based on the real-time distance, that the node that is being connected to is not of the optimal distance. In this case, the master control node sends a connection terminating instruction to the node that is being connected to, and selects the node with the optimal distance as a second node based on the real-time distance. The master control node sends a selection message to the second node. The second node establishes a communication connection to the client and exchanges information in response to the probe request frame of the client. That is, in a moving process of the client, a distance between each node and the client is updated in real time, such that the node accessed by the client is always a node with the optimal distance. It can be understood that for each node feeding back distance to the master control node, the busy condition is not met and the RSSI is greater than the preset threshold.

In an actual application scenario, for example, in a room, all nodes meeting the condition of exchanging information with the client present a same network address information. The client is originally located in a living room, and if a node disposed in the living room does not meet the busy condition, the client chooses to access the node in the living room. However, when the client moves to the bedroom, if a node in the bedroom does not meet the busy condition, the node in the living room disconnects from the client under an instruction of the master control node. In addition, the node in the bedroom establishes a communication connection to the client in respond to the probe request frame of the client under the instruction of the master control node, and exchanges information. Because both the node in the living room and the node in the bedroom present the same network address, the information transmission between the node and the client is not affected. In addition, because the node with the optimal distance is selected, the quality of information exchange between the client and the node can be ensured.

In another example, after establishing a communication connection to the client, the method further includes: receiving a message broadcasted by the client based on the second time interval, where the message includes a real-time RSSI of the client; and if the real-time RSSI is not greater than the preset threshold, terminating the connection to the client. That is, in the moving process of the client, if the node determines, based on the real-time RSSI, that the client has exceeded the preset threshold, in other words, the client is no longer within an operating range of the node, the node can determine to disconnect with the client by itself.

In addition, in an actual execution process, when a state, such as a connected, disconnected, busy, or idle state, of the node occurs or changes, corresponding prompt information may be sent to the master control node, such that the master control node can obtain a state of each node in time, and better manage and assign each node.

In this embodiment, a network access method is provided, which is applied to nodes presenting a same network address information, for example, nodes in a mesh network. On the basis that the action of accessing a node in a network by the client is controllable, after the client establishes a communication connection to the node and exchanges information, a network node with an optimal distance to the client can be determined for access based on real-time RSSI information sent by the client or real-time switching can be performed, thereby improving operating efficiency of accessing the network node by the client.

The division of steps of the foregoing methods is only for the purpose of clear description. During implementation, some steps can be merged into one step or split into a plurality of steps. All the steps are within the protection scope of this patent provided that the same logical relationship is included. Any irrelevant modification added or any irrelevant design introduced to an algorithm or a process without changing a core design of the algorithm and process is within the protection scope of this patent.

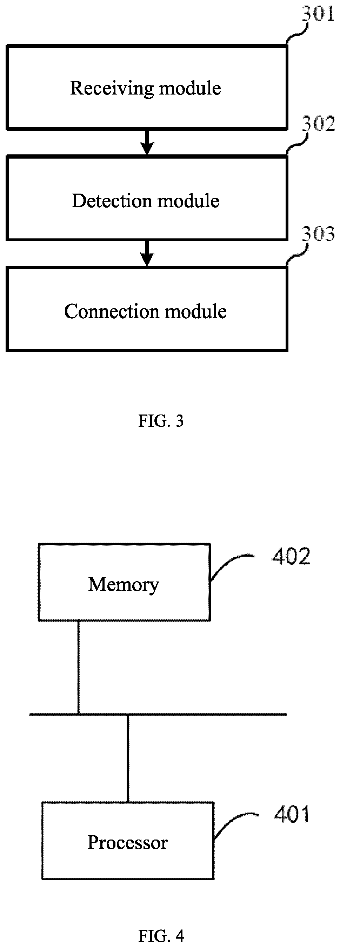

A third embodiment of the present disclosure relates to a network node, as shown in FIG. 3, including: a receiving module 301, a detection module 302 and a connection module 303.

The receiving module 301 is configured to receive a probe request frame sent by a client, where the probe request frame includes an RSSI of the client.

The detection module 302 is configured to detect whether a current state meets a pre-configured busy condition and whether the RSSI is not greater than a preset threshold.

The connection module 303 is configured to: prohibit a response to the probe request frame of the client when the busy condition is met or the RSSI is not greater than the preset threshold; or when the busy condition is not met and the RSSI is greater than the preset threshold, establish a communication connection to the client and exchange information in response to the probe request frame, or notify a master control node in a network to select a first node in the network to respond to the probe request frame of the client.

After establishing a communication connection to the client and exchanging information, the connection module 303 is further configured to: periodically detect, based on a first time interval, whether the current state meets the busy condition; terminate the communication connection to the client when the busy condition is met; and prohibit a response to the probe request frame of the client within a pre-set time threshold.

In an example, after prohibiting a response to the probe request frame of the client, the connection module 303 is further configured to send, to a remaining node in the network, a message indicating that this node is in the busy state.

In an example, notifying a master control node in a network to select a first node in the network to respond to the probe request frame of the client includes: obtaining a distance to the client based on the RSSI; and sending the distance to the master control node, such that the master control node selects the first node based on the distance to respond to the probe request frame of the client.

In an example, obtaining a distance to the client based on the RSSI includes: searching a preset correspondence table of RSSIs and distances for a distance corresponding to the RSSI as the distance to the client.

In an example, after establishing a communication connection to the client and exchanging information, the connection module 303 is further configured to: receive a message broadcasted by the client based on a second time interval, where the message includes a real-time RSSI of the client; obtain a real-time distance to the client based on the real-time RSSI; and send the real-time distance to the master control node, such that the master control node determines whether the node accessed by the client needs to be switched.

In an example, after establishing a communication connection to the client and exchanging information, the connection module 303 is further configured to: receive a message broadcasted by the client based on a second time interval, where the message includes a real-time RSSI of the client; and if the real-time RSSI is not greater than the preset threshold, terminate the connection to the client.

In this embodiment, compared with an existing technology, a network access method is provided, which is applied to network nodes presenting a same network address information. After the probe request frame sent by the client is received, self-detection is triggered to determine whether a current node in a network meets the pre-configured busy condition and whether a signal reception strength meets a requirement. If the busy condition is met or the signal reception strength does not meet the requirement, the client is not responded to. Therefore, the action of accessing the network node by the client is controllable, ensuring operating efficiency and quality of signal transmission between the client and the network node. In addition, it is prevented that the client accesses a busy network node or a network node with unsatisfactory signal reception strength to affect a current operating state of the network node, and a case where the client cannot achieve expected information transmission efficiency after the client establishes a connection to the node in the network is avoided.

It is not difficult to find that this embodiment is a system embodiment corresponding to the foregoing embodiment, and this embodiment can be implemented in conjunction with the foregoing embodiment. The related technical details mentioned in the foregoing embodiment are still valid in this embodiment and will not be described herein again to reduce repetition. Correspondingly, the related technical details mentioned in this embodiment are also applicable to the foregoing embodiments.

It is worth mentioning that all the modules involved in this embodiment are logical modules. During actual application, a logical unit may be a physical unit, a part of a physical unit, or a combination of a plurality of physical units. In addition, to highlight the innovative part of the present disclosure, a unit not closely related to resolving the technical problem proposed in the present disclosure is not introduced, but this does not mean that there are no other units in this embodiment.

A fourth embodiment of the present disclosure relates to an electronic device, as shown in FIG. 4, including: at least one processor 401; and
a memory 402 communicatively connected to the at least one processor.

The memory stores an instruction executable by the at least one processor which, when executed by the at least one processor, causes the at least one processor to implement the foregoing network access method.

The memory is connected to the processor by a bus. The bus may include any quantity of buses and bridges. The bus connects various circuits of one or more processors and memories. The bus may further connect various other circuits such as a peripheral device, a voltage regulator, and a power management circuit together. These are well-known in the art, and therefore are not further described herein. A bus interface provides an interface between the bus and a transceiver. The transceiver may be one element or a plurality of elements, such as a plurality of receivers and transmitters for providing units configured to communicate with various other apparatuses over a transmission medium. Data processed by the processor is transmitted over a wireless medium through an antenna, and the antenna further receives the data and transmits the data to the processor.

The processor is responsible for bus management and general processing, and may further provide various functions, including timing, peripheral interfaces, voltage regulation, power management, and other control functions. The memory may be configured to store data used by the processor to execute an operation.

A fifth embodiment of the present disclosure relates to a computer-readable storage medium, storing a computer program which, when executed by a processor, causes the processor to implement the foregoing method embodiment.

In view of some cases, this embodiment of the present disclosure provides a network access method, which is applied to network nodes presenting a same network address information. After a probe request frame sent by a client is received, self-detection is triggered to determine whether a current node in a network meets the pre-configured busy condition and whether a signal reception strength meets a requirement. If the busy condition is met or the signal reception strength does not meet the requirement, the client is not responded to. Therefore, the action of accessing the network node by the client is controllable, ensuring operating efficiency and quality of signal transmission between the client and the network node. In addition, it is prevented that the client accesses a busy network node or a network node with unsatisfactory signal reception strength to affect a current operating state of the network node, and a case where the client cannot achieve expected information transmission efficiency after the client establishes a connection to the node in the network is avoided.

Those having ordinary skills in the art can understand that all or part of the steps for implementing the foregoing embodiments may be completed by a program instructing related hardware. The program is stored in a storage medium and includes several instructions to enable a device (which may be a single-chip computer, a chip, or the like) or processor to execute all or part of the steps of the methods described in the various embodiments of the present disclosure. The foregoing storage medium includes any medium that can store program code, such as a USB flash drive, a removable hard disk, a Read-Only Memory (ROM), a Random Access Memory (RAM), a magnetic disk, or an optical disc.

Those having ordinary skills in the art can understand that the foregoing embodiments are embodiments for implementing the present disclosure. However, during actual application, various changes may be made in forms and details without departing from the protection scope of the present disclosure.

## Claims

1. A network access method, applied to any node in a network, wherein all nodes in the network present a same network address, and the method comprises:
receiving a probe request frame broadcasted by a client, wherein the probe request frame comprises a Received Signal Strength Indication (RSSI) of the client;
detecting whether a current state meets a pre-configured busy condition and whether the RSSI is not greater than a preset threshold; and
in response to meeting the busy condition or the RSSI being not greater than the preset threshold, prohibiting a response to the probe request frame of the client; or in response to not meeting the busy condition and the RSSI being greater than the preset threshold, establishing a communication connection to the client and exchanging information in response to the probe request frame, or notifying a master control node in the network to select a first node in the network to respond to the probe request frame of the client.

2. The network access method of claim 1, wherein after establishing a communication connection to the client and exchanging information, the method further comprises:
periodically detecting, based on a first time interval, whether the current state meets the busy condition;
in response to meeting the busy condition, terminating the communication connection to the client; and
prohibiting a response to the probe request frame of the client within a pre-set time threshold.

3. The network access method of claim 1, wherein after prohibiting a response to the probe request frame of the client, the method further comprises:
sending, to a remaining node in the network, a message indicating that a current node is in a busy state.

4. The network access method of claim 1, wherein notifying a master control node in the network to select a first node in the network to respond to the probe request frame of the client comprises:
obtaining a distance to the client based on the RSSI; and
sending the distance to the master control node, such that the master control node selects the first node based on the distance to respond to the probe request frame of the client.

5. The network access method of claim 4, wherein obtaining a distance to the client based on the RSSI comprises:
searching a preset correspondence table of RSSIs and distances for a distance corresponding to the RSSI as the distance to the client.

6. The network access method of any one of claims 1 to 5, wherein after establishing a communication connection to the client and exchanging information, the method further comprises:
receiving a message broadcasted by the client based on a second time interval, wherein the message comprises a real-time RSSI of the client;
obtaining a real-time distance to the client based on the real-time RSSI; and
sending the real-time distance to the master control node, such that the master control node determines whether the node accessed by the client needs to be switched.

7. The network access method of any one of claims 1 to 5, wherein after establishing a communication connection to the client and exchanging information, the method further comprises:
receiving a message broadcasted by the client based on a second time interval, wherein the message comprises a real-time RSSI of the client; and
in response to the real-time RSSI being not greater than the preset threshold, terminating the connection to the client.

8. A network node, wherein in a network to which the network node belongs, all nodes present a same network address, and the network node comprises:
a receiving module, configured to receive a probe request frame broadcasted by a client, wherein the probe request frame comprises an RSSI of the client;
a detection module, configured to detect whether a current state meets a pre-configured busy condition and whether the RSSI is not greater than a preset threshold; and
a connection module, configured to: in response to meeting the busy condition or the RSSI being not greater than the preset threshold, prohibit a response to the probe request frame of the client; or in response to not meeting the busy condition and the RSSI being greater than the preset threshold, establish a communication connection to the client and exchange information in response to the probe request frame, or notify a master control node in the network to select a first node in the network to respond to the probe request frame of the client.

9. An electronic device, comprising:
at least one processor; and
a memory communicatively connected to the at least one processor, wherein
the memory stores an instruction executable by the at least one processor which, when executed by the at least one processor, causes the at least one processor to perform the network access method of any one of claims 1 to 7.

10. A computer-readable storage medium, storing a computer program which, when executed by a processor, causes the processor to perform the network access method of any one of claims 1 to 7.
